(19) Europäisches Patentamt
European Patent Office
Office européen des brevets

(11) **EP 4 671 633 A1**

(12) **EUROPEAN PATENT APPLICATION**

(43) Date of publication:
**31.12.2025 Bulletin 2026/01**

(21) Application number: **25185063.2**

(22) Date of filing: **25.06.2025**

(51) International Patent Classification (IPC):
**F24F 3/14** (2006.01)     G05B 19/042 (2006.01)

(52) Cooperative Patent Classification (CPC):
**F24F 3/1423; F24F 3/14;** F24F 11/0008;
F24F 11/63; F24F 2003/144; F24F 2110/10;
F24F 2110/20; F24F 2203/1032; G05B 19/042

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.06.2024 SE 2450736**

(71) Applicant: **Munters Europe Aktiebolag
164 26 Kista (SE)**

(72) Inventors:
• **RAAK, Fredrik
172 70 Sundbyberg (SE)**
• **PARVINI AHMADI, Shervin
171 50 Solna (SE)**

(74) Representative: **Zacco Sweden AB
P.O. Box 5581
Löjtnantsgatan 21
114 85 Stockholm (SE)**

(54) **CASCADE CONTROL SYSTEMS AND DEHUMIDIFIER SYSTEMS FOR CONTROLLING A HUMIDITY LEVEL**

(57)     A cascade control system (200) of a dehumidifier (202) for controlling a humidity level comprising:
- a heater (210) for adjusting the humidity level of the outlet process air by heating inlet reactivation air,
- a primary control module (220) for controlling the humidity level by controlling the dehumidifier (202),
- a secondary control module (230) for controlling the temperature of inlet reactivation air to match a desired temperature setpoint (SP2) by controlling the heater (210),

wherein the primary control module (220) is configured to regulate the humidity level to match a desired humidity setpoint (SP1) while providing the desired temperature setpoint (SP2) for the secondary control module as output,
wherein that the primary controller (220) is a Model Predictive Control, MPC, module configured to predict future humidity levels and to calculate the desired temperature setpoint (SP2) for the secondary control module (230) based on the predicted humidity levels.

Fig. 2

**Description**

TECHNICAL FIELD

The present disclosure relates to control systems for dehumidifiers. In particular, the present disclosure relates to modified cascade control systems comprising a model predictive control module.

BACKGROUND ART

Fine-tuning of control systems for dehumidifiers to achieve optimal performance, such as maintaining a desired set point, can be challenging due to the many factors that affect humidity, e.g. temperature and air flow characteristics of the local environment. The control system has to react quickly enough to changes while also limit the amount of unwanted fluctuation in humidity when trying to maintain the set point. The control systems typically comprise a set of Proportional-Integral-Derivative, PID, controllers that determine the behaviour of the control system. Tuning of PID parameters can be time consuming and quite subjective in that every expert does it in their own way, often resulting in suboptimal parameters and settings. There is thus a need in the art for improved control systems for dehumidifiers.

SUMMARY OF THE INVENTION

The main idea of the present disclosure is to modify cascade PID-controllers for humidifiers by introducing a model predictive control, MPC, module that can use its predictions to reach set points faster with less fluctuation around the set point. By introducing artificial intelligence in the MPC module, for instance using machine learning, ML, algorithms, such as a neural network, for prediction and/or set point generation, the control system can be tailored to capture the complexity of all interdependencies of the parameters that contribute to the prediction and/or set point generation.

Specifically, the present disclosure relates to a cascade control system of a dehumidifier for controlling a humidity level. The dehumidifier comprises a desiccant rotor. The desiccant rotor comprises a desiccant material. The dehumidifier is arranged to guide a process air stream and a reactivation air stream across separate axially extending channels through the desiccant material. Each air stream has respective inlet air when entering the desiccant material and outlet air when exiting the desiccant material. The inlet reactivation air is arranged to remove moisture from the desiccant material when heated. The cascade control system comprises a heater for adjusting the humidity level of the outlet process air by heating the inlet reactivation air. The cascade control system further comprises a primary control module for controlling the humidity level by controlling at least one operational parameter of the dehumidifier. The cascade control system also comprises a secondary control module for controlling the temperature of the inlet reactivation air to match a desired temperature setpoint by controlling at least one operational parameter of the heater. The primary control module is configured to regulate the humidity level to match a desired humidity setpoint while providing the desired temperature setpoint for the secondary control module as output. The primary controller is a Model Predictive Control, MPC, module configured to predict future humidity levels based on historical data on the humidity level and historical data on the desired temperature setpoints provided to the secondary control module, and to calculate the desired temperature setpoint for the secondary control module based on the predicted humidity levels.

A cascade control system is thereby provided that provides more precise, more stable and faster control of the humidity level compared to a corresponding cascade PID control system. A further potential technical effect and advantage is that the cascade control system architecture can be simplified with respect to the prior art. In particular, many prior art cascade control systems require a dedicated safety mechanism, such as a switch, that prevents the heater from getting overheated. The disclosed cascade control system does not need such dedicated safety mechanisms.

According to some aspects, the MPC module is configured to utilize a machine learning, ML, algorithm in the prediction of the future humidity levels.

The use of machine learning means that the predictive model does not have to be explicitly modelled but can be discovered by supplying the machine learning algorithm with suitable training data. A further technical effect is that the machine learning algorithm enables the MPC module, and thus the cascade control system, to capture and implicitly model complex interdependencies, e.g. integrating sensor data from multiple sensors.

According to some aspects, the secondary control module comprises at least one PID controller.

According to some aspects, the MPC module is further configured to predict the future humidity levels and/or to calculate the desired temperature setpoint for the secondary control module based on sensor data relating to parameters influencing the humidity level being controlled. By integrating additional sensor data, such as a humidity level of the inlet process air, the model predictions of the MPC module provide an improved control performance, such more responsive control.

According to some aspects, the MPC module comprises a predictor module and an optimizer module. The predictor module is configured to predict the future humidity levels. The predicting of the future humidity levels further comprises generating a plurality of sequential future humidity levels and generating a plurality of future desired temperature setpoints. The optimizer module is configured to calculate the desired temperature setpoint for the secondary control module. The calculating of the desired temperature setpoint is based on at least one of a humidity level control performance metric using the plurality of sequential future humidity levels, a desired temperature setpoint stability metric using the plurality of future desired temperature setpoints and an energy efficiency performance metric using the plurality of future desired temperature setpoints.

This enables striking a compromise between the three (potentially conflicting) goals of achieving a humidity level close to the desired humidity setpoint, keeping the temperature of the heater stable and obtaining optimal energy efficiency.

According to some aspects, the predicting of future humidity levels is performed using a linear model.

The use of a linear model turns the optimization problem into a convex optimization problem.

According to some aspects, the calculating of the desired temperature setpoint is determined from a closed form solution.

This greatly speeds up the optimization and reduces the computational burden.

According to some aspects, the cascade control system further comprises a primary PID control module configured to control the humidity level by controlling the at least one operational parameter of the dehumidifier and provide the desired temperature setpoint for the secondary control module when a predetermined criterion is met.

By equipping the cascade control system with a PID control module that mirrors the MPC module, the primary PID control module can serve as a reference and provide training data to a machine learning algorithm of the MPC module. When the MPC module has been trained to the level that the MPC module and the secondary control module perform as well as the primary PID control module, the primary PID control module can be switched off. Likewise, if there is a sudden change in the operational environment for which the MPC module and the secondary control module performs poorly, the cascade control system can switch to using the primary PID control module and collect training data for the new operational environment. The primary PID control module thereby functions as both a fallback and a mechanism for any machine learning algorithm to obtain relevant training data.

According to some aspects, the cascade control system is further configured to adjusting the desired temperature setpoint for the secondary control module based on the temperature and/or the humidity level of the outlet reactivation air.

According to some aspects, the cascade control system further comprises a tertiary control module for controlling the temperature of the outlet reactivation air by adjusting the desired temperature setpoint for the secondary control module based on a difference between the temperature of the outlet reactivation air and a predetermined threshold temperature.

The reason for this is safety and efficiency. The idea is that, as long as the temperature of the outlet reactivation air is below a pre-specified threshold, then the tertiary control module is not active. Once the temperature exceeds the threshold, then the tertiary control module is activated and it regulates (decreases) the desired temperature setpoint for the secondary control module.

According to some aspects, the cascade control system further comprises a quaternary control module. The quaternary control module is configured to receive a desired room humidity setpoint relating to a humidity level of a room to which the outlet process air is fed, receive a current humidity level of the room, and generate the desired humidity setpoint for the primary control module.

The cascade control system thereby has three nested loops - an outmost loop to control the humidity level of the room, an inner loop to control the humidity level of the outlet process air and an innermost loop to control the temperature of the outlet reactivation air.

An advantage of doing it this way instead of controlling the room humidity directly is that it simplifies the room humidity controller which now controls the dry air humidity, and the relationship between outlet process air humidity and room humidity is simpler than the relationship between dehumidifier actuators and room humidity.

Another advantage is that the outlet process air control loop only concerns the dehumidifier, not the room, and can be configured such that the dehumidifier itself is running in an energy efficient manner, while the outer (room humidity) controller tries to accomplish the goal of making sure the room has the desired humidity.

The present disclosure further relates to a dehumidifier system for controlling a humidity level. The dehumidifier system comprises a dehumidifier and a cascade control system for controlling a humidity level as described above and below. The dehumidifier system has all the technical effects and advantages of the cascade control system.

BRIEF DESCRIPTION OF THE DRAWINGS

Figure 1 illustrates an example of a dehumidifier for which the cascade control system may be used;

Figure 2 illustrates the disclosed cascade control system; and

Figure 3 illustrates a dehumidifier system.

DETAILED DESCRIPTION

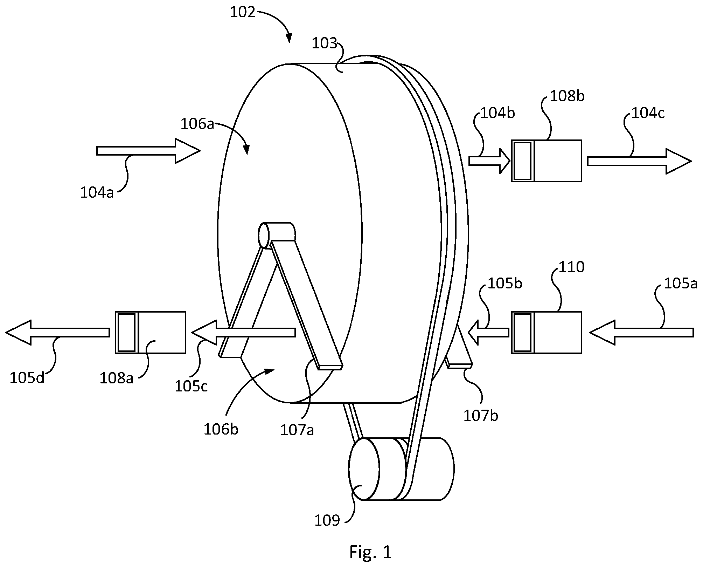

Figure 1 illustrates an example of a dehumidifier 102 for which the disclosed cascade control system may be used. The dehumidifier 102 comprises a desiccant rotor 103. The desiccant rotor comprises a desiccant material. In the illustrated example, the dehumidifier comprises a drive motor 109 arranged to rotate the desiccant rotor 103.

The dehumidifier 102 is arranged to guide a process air stream 104a-c and a reactivation air stream 105a-d across separate axially extending channels 106a, 106b through the desiccant material. Each air stream has respective inlet air 104a, 105b when entering the desiccant material and outlet air 104b, 105c when exiting the desiccant material. The air streams are preferably separated physically, e.g. by channel guides 107a, 107b.

In practice the dehumidification process starts by having inlet process air 104a pass through the desiccant material, thereby having moisture absorbed and/or adsorbed by the desiccant material. For the sake of brevity, we will use adsorbed to describe the capture of moisture by the desiccant material throughout the description, but it is to be understood that absorption could be a complimentary or even the main process by which moisture is captured. The process air then exits the desiccant material as dehumidified process air, herein referred to as outlet process air 104b or dry air. The outlet process air 104b can then be guided 104c, e.g. by a fan 108b, to its intended destination, such as a room.

The amount of moisture already adsorbed by the desiccant material affects the amount of moisture that will be adsorbed by the inlet process air. Thus, there is a mechanism for removing moisture from the desiccant material using the reactivation air stream. Specifically, hot air is led to the desiccant material, wherein the heat causes the adsorbed moisture to be released from the desiccant material and carried away by the reactivation air stream. In other words, the heater is arranged to adjust the humidity level of the outlet process air 104b by heating the inlet reactivation air 105b. The humidity level is adjusted indirectly since the removal of adsorbed moisture from the desiccant material by the reactivation stream makes the desiccant material more effective at dehumidifying the inlet process air.

The reactivation air can be taken from air diverted from the process air stream or air recirculated from a space that the outlet process air is used to control the humidity level of. The reactivation air 105a is heated by a heater 110 such that the inlet reactivation air 105b is heated to allow for moisture to be released from the desiccant material and carried off with the outlet reactivation air 105c. The outlet reactivation air 105c, herein also called wet air, can then be removed 105d, e.g. using a fan 108a.

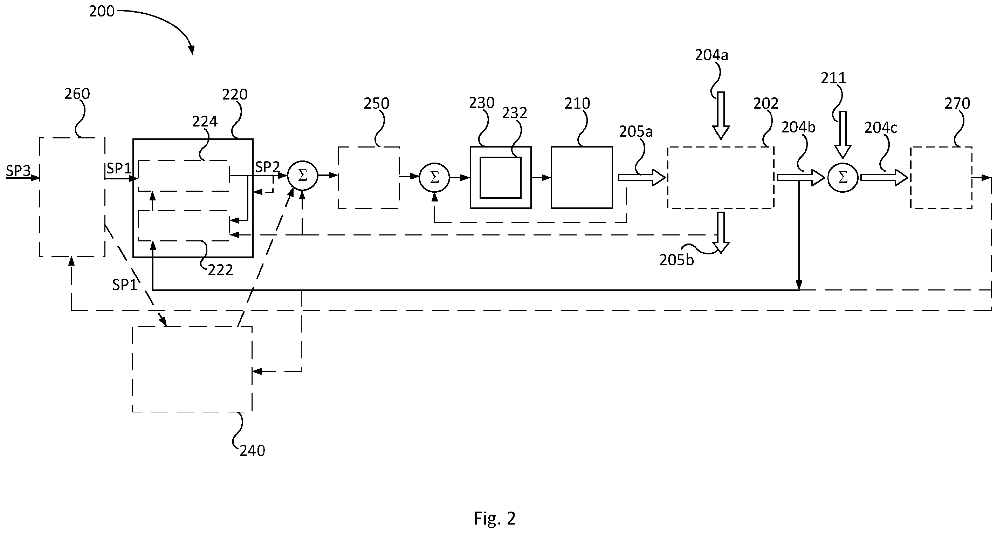

Figure 2 illustrates the disclosed cascade control system 200 of a dehumidifier 202 for controlling a humidity level. According to some aspects, the controlled humidity level is a humidity level of the outlet process air 204b. According to some aspects, the controlled humidity level is a humidity level of a room, for example a room to which the outlet process air is guided 204c.

The dehumidifier 202 comprises a desiccant rotor. The desiccant rotor comprises a desiccant material. The dehumidifier is arranged to guide a process air stream 204a-204c and a reactivation air stream 205a-b across separate axially extending channels through the desiccant material, each air stream having respective inlet air 204a, 205a when entering the desiccant material and outlet air 204b, 205b when exiting the desiccant material. The inlet reactivation air 205a is arranged to remove moisture from the desiccant material when heated. The cascade control system 200 comprises a heater 210 for adjusting the humidity level of the outlet process air by heating the inlet reactivation air.

The cascade control system 200 further comprises a primary control module 220 for controlling the humidity level by controlling at least one operational parameter of the dehumidifier 202.

The cascade control system 200 also comprises a secondary control module 230 for controlling the temperature of the inlet reactivation air 205a to match a desired temperature setpoint SP2 by controlling at least one operational parameter of the heater 210. According to some aspects, the secondary control module 230 comprises at least one PID controller 232.

The primary control module 220 is configured to regulate the humidity level to match a desired humidity setpoint SP1 while providing the desired temperature setpoint SP2 for the secondary control module as output.

The primary controller 220 is a Model Predictive Control, MPC, module configured to predict future humidity levels based on historical data on the humidity level and historical data on the desired temperature setpoints provided to the secondary control module, and to calculate the desired temperature setpoint SP2 for the secondary control module 230 based on the predicted humidity levels.

According to some aspects, the MPC module is further configured to predict the future humidity levels and/or to calculate the desired temperature setpoint SP2 for the secondary control module based on sensor data relating to parameters influencing the humidity level being controlled. An example of sensor data is a humidity level of the inlet process air.

According to some aspects, the MPC module 220 is configured to utilize a machine learning, ML, algorithm in the prediction of the future humidity levels. In some examples, the machine learning algorithm is a single ML algorithm configured to take the desired humidity setpoint SP1 and at least one measurement relating to the humidity level to be regulated is input, optionally also sensor data relating to parameters influencing the humidity level being controlled as input and calculate the desired temperature setpoint SP2 as output. In some other examples, the MPC module 220 comprises a plurality of modules, each potentially implementing a respective ML algorithm, such as the predictor module 222 and optimizer module 224 described above and below.

According to some aspects, the MPC module comprises a predictor module 222 and an optimizer module 224. The predictor module 222 is configured to predict the future humidity levels. The predicting of the future humidity levels further comprises generating a plurality of sequential future humidity levels and generating a plurality of future desired temperature setpoints. The optimizer module 224 is configured to calculate the desired temperature setpoint for the secondary control module. The calculating of the desired temperature setpoint is based on at least one of a humidity level control performance metric using the plurality of sequential future humidity levels, a desired temperature setpoint stability metric using the plurality of future desired temperature setpoints and an energy efficiency performance metric using the plurality of future desired temperature setpoints.

According to some aspects, the predictor is a machine learning model which predicts the humidity level k-step-ahead using the historical data of the humidity level and the desired temperature setpoint.

Once the model or predictor is found, MPC control strategy can be used. In particular, the optimization problem

$$\min_{u_t,\dots,u_{t+n-1}} \alpha_1 \sum_{n=1}^{N}(y_{\mathrm{SP}} - \hat{y}_{t+n})^2 + \alpha_2 \sum_{n=0}^{N-1}(u_{t+n} - u_{t+n-1})^2 + \alpha_3 \sum_{n=0}^{N-1} u_{t+n}{}^2$$

$$s.t.\ \hat{y}_{t+n} = F(u_{t+n-1}, u_{t+n-2}, \dots, \hat{y}_{t+n-1}, \hat{y}_{t+n-2}, \dots),\quad 1 \le n \le N$$

$$u_{min} \le u_{t+n} \le u_{\max},\quad 0 \le n \le N-1$$

is solved at each time step t, and then the cascade control system 200 only applies the first computed control action $u_t$. The same procedure is repeated for the following time steps. Here, $\hat{y}_{t+n}$ is the humidity level prediction $n$ sample time ahead, $u_{t+n}$ is the desired temperature setpoint n sample time ahead, $y_{SP}$ is the desired humidity level setpoint, $F$ is the function to predict $\hat{y}_{t+n}$, $u_{min}$ and $u_{max}$ are the minimum and the maximum levels for the desired temperature setpoint, $\alpha_1$, $\alpha_2$ and $\alpha_3$ are arbitrary parameters between 0 and 1.

Solving the optimization problem means finding control actions to achieve three potentially conflicting goals. The first one is to minimize the squared errors between humidity level predictions and the desired setpoint $y_{SP}$. The second one is to keep the desired temperature setpoint command $u$ stable, which is achieved by penalizing changes to it. The third one is to optimize energy efficiency. One can find a compromise between these goals by adjusting $\alpha_1$, $\alpha_2$ and $\alpha_3$. It should be noted that any of the arbitrary parameters $\alpha_1$, $\alpha_2$ and $\alpha_3$ can be set to zero, thereby optimizing with respect to only one or two of the goals.

Thus, according to some aspects, the optimizer module 224 is configured to calculate the desired temperature setpoint for the secondary control module. The calculating of the desired temperature setpoint comprises a simultaneous minimization of a cumulative difference between each of the future humidity levels and the desired humidity setpoint, a cumulative difference between sequentially pairwise future desired temperature setpoints and a cumulative sum of square or absolute future desired temperature setpoints. If responsiveness is prioritized without consideration to energy efficiency, the arbitrary parameter $\alpha_3$, which determines the relative importance of energy efficiency, can be set to zero. Thus, in some examples, the calculating of the desired temperature setpoint comprises a simultaneous minimization of a cumulative difference between each of the future humidity levels and the desired humidity setpoint and a cumulative difference between sequentially pairwise future desired temperature setpoints.

The required data for training the model can be obtained by applying a random signal on the desired temperature setpoint and gathering the resulting humidity level, such as the outlet process air humidity level or a humidity level of a room to which the outlet process air is guided. It is also possible to fit a model with data collected from running the system with a standard PID controller instead of the MPC module. According to some aspects, the predicting of future humidity levels is performed using a linear model. Linear models often work very well in practice and turns the optimization problem of controlling the humidity level into a convex optimization problem. In some examples, the use of a linear model enables finding a closed form solution to the optimization problem. Thus, according to some aspects, the calculating of the desired temperature setpoint is determined from a closed form solution. A closed form solution drastically reduces both the time it takes to solve the optimization problem and the computational resources required to do so, which in turn also reduces energy consumption.

If the MPC module is configured to utilize a ML algorithm, the cascade control system may be equipped with a PID control module configured to perform the task of the MPC module. This extra PID control module thereby functions as a reference for the MPC module and can provide the ML algorithm with training data to bring the MPC module performance up to a predetermined minimum performance before the MPC module takes over the role served by the PID control module. Thus, according to some aspects, the cascade control system further comprises a primary PID control module 240 configured to control the humidity level by controlling the at least one operational parameter of the dehumidifier and provide the desired temperature setpoint SP2 for the secondary control module when a predetermined criterion is met. As illustrated above, in some examples, the predetermined criterion relates to a relative control performance of the MPC module compared to a control performance of the primary PID control module 240.

According to some aspects, the predetermined criterion relates to an absolute control performance criterion. For instance, if there is a sudden change in the operational environment for which the MPC module and the secondary control module performs poorly, the cascade control system can switch to using the primary PID control module and collect training data for the new operational environment. The primary PID control module thereby functions as both a fallback and a mechanism for any machine learning algorithm to obtain relevant training data.

According to some aspects, the cascade control system is further configured to adjusting the desired temperature setpoint SP2 for the secondary control module based on the temperature and/or the humidity level of the outlet reactivation air 205b. According to some further aspects, the system is configured to provide the temperature and/or the humidity level of the outlet reactivation air 205b as input to the MPC module 220. In some examples, the temperature and/or the humidity level of the outlet reactivation air 205b is input to a predictor module 222 of the MPC module 220, and wherein the predictor module 222 is further configured to predict the future humidity levels based on the temperature and/or the humidity level of the outlet reactivation air 205b.

Alternatively, the system comprises a dedicated controller configured to adjust the desired temperature setpoint SP2 for the secondary control module based on the temperature and/or the humidity level of the outlet reactivation air. Thus, according to some aspects, the cascade control system further comprises a tertiary control module 250 for controlling the temperature of the outlet reactivation air by adjusting the desired temperature setpoint SP2 for the secondary control module based on a difference between the temperature of the outlet reactivation air and a predetermined threshold temperature. This provides a safety mechanism to prevent system overheating, the outlet reactivation air having an undesirable temperature and improves efficiency since the system can continue to operate without interruption. In some examples, the setpoint of the outlet reactivation air control is the difference between temperature of the outlet reactivation air and the predetermined threshold temperature. According to some aspects, the predetermined threshold temperature is selected from a range of forty to eighty degrees Celsius, °C. According to some further aspects, the predetermined threshold temperature is selected from a range of fifty to seventy °C. In one example, the predetermined threshold temperature is set to sixty °C.

In some examples, it is desirable to control the humidity level of a room to which the outlet process air is fed. Such rooms are sometimes connected to potential air streams that provide a humidity load 211 to the room, such as when opening a door and the air of the room is subject to air from an adjacent room or corridor. Control of the desired room humidity level can be obtained by nesting three control loops in the cascade control system. The outmost loop controls the humidity level of the room, the intermediate loop controls the humidity level of the outlet process air and the innermost loop controls the temperature of the outlet reactivation air. Thus, according to some aspects, the cascade control system further comprises a quaternary control module 260. The quaternary control module 260 is configured to receive a desired room humidity setpoint SP3 relating to a humidity level of a room 270 to which the outlet process air is fed, receive a current humidity level of the room, and generate the desired humidity setpoint SP1 for the primary control module. In some examples, the quaternary control module is a Model Predictive Control, MPC, module.

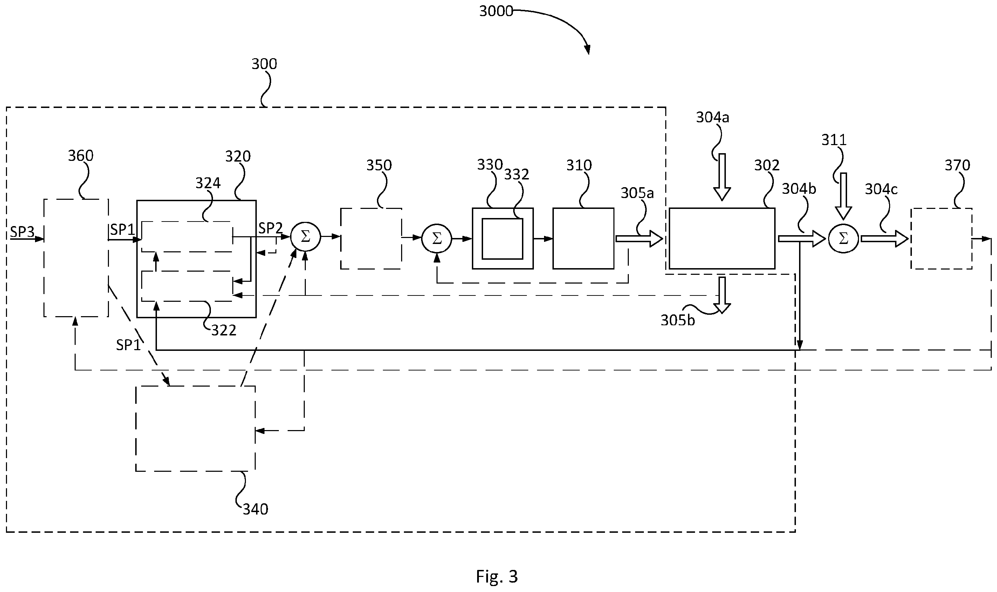

Figure 3 illustrates a dehumidifier system 3000 for controlling a humidity level. The dehumidifier system comprises a dehumidifier 302, and a cascade control system for controlling a humidity level, as described above and below. The reference numbers of Figure 3 have the same meaning as corresponding reference numbers of Figure 2. The dehumidifier 302 is configured to operate along the principles described in relation to Figure 1. Specifically, the dehumidifier 302 comprises a desiccant rotor. The desiccant rotor comprises a desiccant material. The dehumidifier is arranged to guide a process air stream 304a-c and a reactivation air stream 305a-b across separate axially extending channels through the desiccant material, each air stream having respective inlet air 304a, 305a when entering the desiccant material and outlet air 304b, 305b when exiting the desiccant material. The inlet reactivation air 305a is arranged to remove moisture from the desiccant material when heated. Since the dehumidifier system comprises a cascade control system as described above and below, the dehumidifier system has the same technical effects and advantages.

## Claims

1. A cascade control system (200, 300) of a dehumidifier (102, 202, 302) for controlling a humidity level, the dehumidifier (102, 202, 302) comprising a desiccant rotor (103), the desiccant rotor (103) comprising a desiccant material, the dehumidifier being arranged to guide a process air stream (104a-c) and a reactivation air stream (105a-d) across separate axially extending channels (106a, 106b) through the desiccant material, each air stream having respective inlet air (104a, 105b) when entering the desiccant material and outlet air (104b, 105c) when exiting the desiccant material, the inlet reactivation air (105b) being arranged to remove moisture from the desiccant material when heated, the cascade control system comprising:

- a heater (110, 210, 310) for adjusting the humidity level of the outlet process air (104b) by heating the inlet reactivation air (105b),
- a primary control module (220, 320) for controlling the humidity level by controlling at least one operational parameter of the dehumidifier (102, 202, 302),
- a secondary control module (230, 330) for controlling the temperature of the inlet reactivation air (105b) to match a desired temperature setpoint (SP2) by controlling at least one operational parameter of the heater (110, 210, 310),
wherein the primary control module (220,320) is configured to regulate the humidity level to match a desired humidity setpoint (SP1) while providing the desired temperature setpoint (SP2) for the secondary control module as output,
wherein that the primary controller (220, 320) is a Model Predictive Control, MPC, module configured to predict future humidity levels based on historical data on the humidity level and historical data on the desired temperature setpoints provided to the secondary control module, and to calculate the desired temperature setpoint (SP2) for the secondary control module (130, 230, 330) based on the predicted humidity levels.

2.  The cascade control system according to claim 1, wherein the MPC module (220, 320) is configured to utilize a machine learning, ML, algorithm in the prediction of the future humidity levels.

3.  The cascade control system according to claim 1 or 2, wherein the secondary control module (230, 330) comprises at least one PID controller (232, 332).

4.  The cascade control system according to any of the preceding claims, wherein the MPC module is further configured to predict the future humidity levels and/or to calculate the desired temperature setpoint (SP2) for the secondary control module based on sensor data relating to parameters influencing the humidity level being controlled.

5.  The cascade control system according to any of the preceding claims, wherein the MPC module comprises

- a predictor module (222, 322), and
- an optimizer module (224, 324),
wherein the predictor module (222, 322) is configured to predict the future humidity levels, the predicting of the future humidity levels further comprises

• generating a plurality of sequential future humidity levels,
• generating a plurality of future desired temperature setpoints,

wherein the optimizer module (224, 324) is configured to calculate the desired temperature setpoint for the secondary control module, the calculating of the desired temperature setpoint being based on at least one of a humidity level control performance metric using the plurality of sequential future humidity levels, a desired temperature setpoint stability metric using the plurality of future desired temperature setpoints and an energy efficiency performance metric using the plurality of future desired temperature setpoints.

6.  The cascade control system according to any of the preceding claims, wherein the predicting of future humidity levels is performed using a linear model.

7.  The cascade control system according to claim 6, the calculating of the desired temperature setpoint is determined from a closed form solution.

8.  The cascade control system according to any of the preceding claims, further comprising a primary PID control module (240, 340) configured to control the humidity level by controlling the at least one operational parameter of the dehumidifier and provide the desired temperature setpoint (SP2) for the secondary control module when a predetermined criterion is met.

9. The cascade control system according to any of the preceding claims, wherein the cascade control system is further configured to adjusting the desired temperature setpoint (SP2) for the secondary control module based on the temperature and/or the humidity level of the outlet reactivation air.

10. The cascade control system according to any of the preceding claims, further comprising

   - a tertiary control module (250, 350) for controlling the temperature of the outlet reactivation air by adjusting the desired temperature setpoint (SP2) for the secondary control module based on a difference between the temperature of the outlet reactivation air and a predetermined threshold temperature.

11. The cascade control system according to any of the preceding claims, further comprising

   - a quaternary control module (260, 360), the quaternary control module being configured to

      • receive a desired room humidity setpoint (SP3) relating to a humidity level of a room (270, 370) to which the outlet process air is fed,
      • receive a current humidity level of the room, and
      • generate the desired humidity setpoint (SP1) for the primary control module.

12. A dehumidifier system (3000) for controlling a humidity level, the dehumidifier system comprising

   - a dehumidifier (302), and
   - a cascade control system (200, 300) according to any of claims 1-11.

Fig. 1

EP 4 671 633 A1

Fig. 2

Fig. 3

Europäisches
Patentamt

European
Patent Office

Office européen
des brevets

**EUROPEAN SEARCH REPORT**

Application Number

EP 25 18 5063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 4 926 618 A (RATLIFF CHARLES [US]) 22 May 1990 (1990-05-22) * the whole document * | 1-12 | INV. F24F3/14 ADD. G05B19/042 |
| Y | WANG NAN ET AL: "Desiccant wheel thermal performance modeling for indoor humidity optimal control", APPLIED ENERGY, ELSEVIER SCIENCE PUBLISHERS, GB, vol. 112, 15 April 2013 (2013-04-15), pages 999-1005, XP028731671, ISSN: 0306-2619, DOI: 10.1016/J.APENERGY.2013.03.060 * the whole document * | 1-12 | |
| A | JIANG YULIANG ET AL: "Dynamic modeling and economic model predictive control of a liquid desiccant air conditioning", APPLIED ENERGY, ELSEVIER SCIENCE PUBLISHERS, GB, vol. 259, 7 December 2019 (2019-12-07), XP085975515, ISSN: 0306-2619, DOI: 10.1016/J.APENERGY.2019.114174 [retrieved on 2019-12-07] * the whole document * | 1-12 | TECHNICAL FIELDS SEARCHED (IPC) F24F G05B |

The present search report has been drawn up for all claims

| Place of search | Date of completion of the search | Examiner |
|---|---|---|
| The Hague | 29 October 2025 | Itoafa, Alex |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 5063

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2025

| Patent document cited in search report | Publication date | Patent family member(s) | Publication date |
|---|---|---|---|
| US 4926618 A | 22-05-1990 | NONE | |

EPO FORM P0459

For more details about this annex : see Official Journal of the European Patent Office, No. 12/82